(19) Europäisches Patentamt / European Patent Office / Office européen des brevets

(11) **EP 1 538 132 B1**

(12) **EUROPEAN PATENT SPECIFICATION**

(45) Date of publication and mention
of the grant of the patent:
**24.07.2013  Bulletin 2013/30**

(51) Int Cl.:
***C04B 35/117*** (2006.01)

(21) Application number: **03795349.4**

(86) International application number:
**PCT/JP2003/011538**

(22) Date of filing: **10.09.2003**

(87) International publication number:
**WO 2004/024649 (25.03.2004 Gazette 2004/13)**

(54) **CERAMIC AND METHOD FOR PRODUCTION THEREOF**

KERAMIK UND HERSTELLUNGSVERFAHREN DAFÜR

CERAMIQUE ET PROCEDE DE PRODUCTION CORRESPONDANT

(84) Designated Contracting States:
**DE FR GB IT**

(30) Priority: **12.09.2002  JP 2002267186**

(43) Date of publication of application:
**08.06.2005  Bulletin 2005/23**

(73) Proprietor: **Sodick Co., Ltd.**
**Kanagawa 222-8522 (JP)**

(72) Inventors:
• **OKIYAMA, Yoshiharu**
**Kaga-shi,**
**Ishikawa 922-0595 (JP)**

• **YAMAGUCHI, Ryo,**
**c/o Sodick New Material Co., Ltd.**
**Kaga-shi,**
**Ishikawa 922-0595 (JP)**

(74) Representative: **Kensett, John Hinton**
**Saunders & Dolleymore LLP**
**9 Rickmansworth Road**
**Watford**
**WD18 0JU (GB)**

(56) References cited:
EP-A- 0 339 903      EP-A1- 0 339 903
GB-A- 2 288 597      JP-A- 8 067 553
JP-A- 60 176 966     JP-B2- 1 022 225
US-A- 3 791 833      US-A- 4 714 640

**Description**

**Technical Field**

The present invention relates to ceramics suitable for a precision chuck for holding a glass substrate for an FPD (flat panel display). For example, a vacuum chuck or an electrostatic chuck.

**Background Art**

In FPD manufacturing devices and semiconductor manufacturing devices, various types of precision chucks or support platforms are used to hold a glass substrate or semiconductor wafer. These devices are generally averse to unnecessary reflected or transmitted light.

Japanese Laid-open Patent No. 8-262090 discloses a support platform on which a glass substrate for an LCD (Liquid Crystal Display) is mounted, and which is subjected to alumite processing and blackening. Light is randomly reflected at the surface of the blackened support platform and also absorbed, which means that undesired halation that causes reflection of light is prevented.

Japanese Laid-Open Patent No. 8-139168 discloses a ceramic vacuum chuck formed with a thin film layer of low reflectance. Recently, since it has become possible to provide larger FPD substrates and wafers, there has been an increased demand for ceramic chucks of high specific rigidity (Young's modulus/specific gravity). Compared to aluminium, which has a specific rigidity of 28 $GPa.cm^3/g$, Alumina ceramics or $AlN$ ceramics have a specific rigidity of 80-95 $GPa.cm^3/g$ or 90-95 $GPa.cm^3/g$.

Japanese Laid-open Patent Nos. 2001-019540 and 10-095673, disclose blackened ceramics with a base of cordierite, and blackened ceramics with a base of $AlN$ respectively. These blackened ceramics are the same insulators as an FPD substrate. If a chuck made of an insulating ceramic is brought into contact with an FPD substrate, electrostatic polarization occurs inside the substrate. As a result of this, spark discharge occurs and the substrate is damaged.

Japanese Laid-open Patent No. 11-245133 describes problems caused by electrostatic polarization that occurs, for example, when manufacturing a slider for a magnetic head. A plurality of sliders are obtained by cutting a slider bar having a plurality of thin film elements formed thereon. If the slider bar is joined to an insulating jig, electrical charge is polarized inside the metal layer of the thin film elements. This publication discloses the use of a jig of semiconductive ceramics in order to solve the problem caused by electrostatic polarization. Surface resistivity of the disclosed jig is within a range of greater than or equal to $1X10^6$ ohms per square to less than $1X10^{12}$ ohms per square.

Semiconductor ceramics having a base of alumina ($Al_2O_3$) with 0.5-2 wt% $TiO_2$ added are known from Japanese Laid-open Patent No. 62-094953. The alumina ceramic is calcinated in a reducing atmosphere.

Japanese Laid-open Patent No. 11-189458 discloses semiconductor ceramics having a volume resistivity of $10^4$-$10^{12}$ $\Omega.cm$, and capable of withstanding voltages of 10 kV/mm or greater. These semiconductor ceramics contain alumina crystal grains of 40-85% by volume, and one or more of $MnNb_2O_6$, $Mn_2AlO_4$ and $MnFe_2O_4$. Comparatively inexpensive alumina is generally calcinated in an ordinary atmosphere, which means that it is possible to manufacture semiconductor ceramics on a large scale.

GB 2 288 597 A discloses alumina ceramics having a volume resistivity of $1x10^7$ - $1x10^{13}\Omega.cm$.

The object of the present invention is to provide an alumina ceramic having high specific rigidity by including, as the main component, alumina in a high proportion.

Another object of the present invention is to provide ceramics that satisfy the requirements of low reflectance and semiconductivity, without excessively lowering the proportion of alumina.

According to an aspect of the present invention there is provide a ceramic containing 80% wt or greater of alumina, $SiO_2$ in an amount of 4% wt or greater, $CaO$ in an amount of 0.4% wt or greater, $MgO$ in an amount of 0.4% wt or greater, the elements $Mn$, $Ti$ and $Fe$, $Mn-Al$ spinel ($MnO·Al_2O_3$) crystals, and anorthite crystals ($CaO·Al_2O_3·2SiO_2$) generated by calcination, and having a volume resistivity of $1 x 10^{11}$ $\Omega·cm$ or less.

Preferably, the ceramic contains a combined weight of 2-11% wt or greater of $Mn$, $Ti$ and $Fe$ as the oxides, 0.5% wt or greater of $Mn$ as manganese dioxide ($MnO_2$), 0.5% wt or greater of $Ti$ as titanium oxide ($TiO_2$), and 0.5% wt or greater of $Fe$ as iron oxide ($Fe_2O_3$).

Preferably, the ceramic contains a combined weight of 6-9% wt or greater of $Si$, $Ca$ and $Mg$ as the oxides, 4% wt or greater of $Si$ as silicon dioxide ($SiO_2$), 0.4% wt or greater of $Ca$ as calcium oxide ($CaO$), and 0.4% wt or greater of $Mg$ as magnesium oxide ($MgO$).

According to another aspect of the present invention, there is provided a method of manufacturing a ceramic as above, wherein a compacted body is formed using a powder containing aluminia ($Al_2O_3$), as a main component, with manganese dioxide ($MnO_2$), titanium oxide ($TiO_2$), iron oxide ($Fe_2O_3$), silica stone or clay, dolomite, calcite and magnesite, to include 80% **wt** or greater of alumina, 4% wt or greater of $SiO_2$, and 0.4% wt or greater of $CaO$, and 0.4% wt or greater of $MgO$, and $Mn-Al$ spinel crystals and anorthite crystals ($CaO·Al_2O_3·2SiO_2$), and the compacted body is calcinated in an LPG furnace or an electrical furnace at temperatures in the range 1,300 - 1,450 °C.

Embodiments of the present invention will now be described, by way of example only, with reference to the accompanying diagrammatic drawings, in which:

Fig. 1 is a graph showing volume resistivity of ceramics as a function of total weight ratio of *Mn, Ti* and *Fe*.
Fig. 2 is an X-ray diffraction pattern for sample No. 5;
Fig. 3 is an X-ray diffraction pattern for sample No. 6;
Fig. 4 is an X-ray diffraction pattern for sample No. 7;
Fig. 5 is molecular maps of sample No. 5 using EPMA;
Fig. 6 is molecular maps of sample No. 7 using EPMA;
Fig. 7 shows cumulative reflectance for sample No. 1;
Fig. 8 shows cumulative reflectance for sample No. 5;
Fig. 9 shows cumulative reflectance for sample No. 6;
Fig. 10 shows cumulative reflectance for sample No. 7;
Fig. 11 shows regular reflectance for sample No. 1;
Fig. 12 shows regular reflectance for sample No. 5;
Fig. 13 shows regular reflectance for sample No. 6; and
Fig. 14 shows regular reflectance for sample No. 7.

Initially after weighing, manganese dioxide ($MnO_2$) powder, titanium oxide ($TiO_2$) powder, iron oxide ($Fe_2O_3$) powder, powdered silica stone or clay, powdered dolomite, powdered calcite and powdered magnesite are mixed with a main component, alumina ($Al_2O_3$) powder. Next, slurry is generated by wet milling the mixed powder. The slurry is then dried using a spray drying method, to generate a base powder. The base powder is press formed and calcinated at a temperature of 1,300 - 1,650 °C in an electrical furnace. In this way, ceramic sintered body samples having a base of alumina (sample Nos. 1-8) were obtained. Ceramic sample Nos. 4-7 are the preferred embodiments, while the ceramic sample Nos. 1-3 are comparative examples.

Table 1 shows composition, calcination temperature, physical characteristics, volume resistivity, crystal phase, cumulative reflectance and regular reflectance for each sample.

TABLE 5

| sample number | | 1 | 2 | 3 | 4 | 5 | 6 | 7 | 8 |
|---|---|---|---|---|---|---|---|---|---|
| composition wt% | $Al_2O_3$ | 99.5 | 92.1 | 91.1 | 89.6 | 88.1 | 85.9 | 83.0 | 79.3 |
| | $TiO_2$ | 0.0 | 0.0 | 1.1 | 1.1 | 1.1 | 1.5 | 2.0 | 2.7 |
| | $Fe_2O_3$ | 0.0 | 0.1 | 0.1 | 1.0 | 2.0 | 2.6 | 3.5 | 5.8 |
| | $MnO$ | 0.0 | 0.0 | 0.0 | 0.7 | 1.3 | 1.6 | 2.4 | 3.8 |
| | $SiO_2$ | 0.0 | 6.3 | 6.2 | 6.1 | 6.0 | 6.6 | 6.8 | 6.1 |
| | $CaO$ | 0.0 | 0.7 | 0.7 | 0.7 | 0.7 | 0.7 | 1.3 | 1.3 |
| | $MgO$ | 0.4 | 0.4 | 0.4 | 0.4 | 0.4 | 0.8 | 0.7 | 0.6 |
| | $Na_2O$ | 0.1 | 0.4 | 0.4 | 0.4 | 0.4 | 0.2 | 0.2 | 0.4 |
| | $K_2O$ | 0.0 | 0.0 | 0.0 | 0.0 | 0.0 | 0.0 | 0.1 | 0.0 |
| | sum | 100.0 | 100.0 | 100.0 | 100.0 | 100.0 | 100.0 | 100.0 | 100.0 |
| composition wt% | $TiO_2 + Fe_2O_3 + MnO$ | 0.0 | 0.1 | 1.2 | 2.8 | 4.4 | 5.8 | 7.9 | 12.3 |
| | $SiO_2 + CaO + MgO$ | 0.4 | 7.3 | 7.3 | 7.2 | 7.1 | 8.1 | 8.8 | 8.0 |
| calcination | temperature °C | 1650°C | 1500°C | 1400°C | 1400°C | 1400°C | 1400°C | 1350°C | 1300°C |
| specific gravity young's modulus specific rigidity volume resistivity | | 3.9 | 3.6 | 3.5 | 3.6 | 3.5 | 3.4 | 3.4 | 3.3 |
| | GPa | 370 | 310 | 295 | 290 | 280 | 235 | 230 | 195 |
| | young's modulus/specific gravity | 94.9 | 86.1 | 85.5 | 81.7 | 80.0 | 69.1 | 68.7 | 59.5 |
| | $\Omega \cdot cm$ | 1.0E+14 | 8.0E+13 | 4.0E+13 | 3.0E+10 | 1.0E+10 | 4.0E+09 | 2.0E+08 | 2.0E+07 |
| crystal phase (quantity) | alumina $(Al_2O_3)$ | large | large | large | large | large | large | large | large |
| | anorthite $(CaO \cdot Al_2O_3 \cdot 2SiO_2)$ | - | small | small | small | small | small | small | small |
| | Mn-Al spinel $(MnO \cdot Al_2O_3)$ | - | - | - | very small | small | smaller med. | medium | medium |
| | ilmenite $(FeO \cdot TiO_2)$ | - | - | - | very small | very small | very small | - | - |
| | rutile $(TiO_2)$ | - | - | very small | - | - | - | - | - |

EP 1 538 132 B1

(continued)

| sample number | | | 1 | 2 | 3 | 4 | 5 | 6 | 7 | 8 |
|---|---|---|---|---|---|---|---|---|---|---|
| cumulative reflectance % | wave length of light | 220nm | 40.0 | | | 22.5 | 22.0 | 12.0 | 11.5 | 10.0 |
| | | 250nm | 24.3 | | | 15.0 | 14.6 | 10.7 | 10.3 | 8.6 |
| | | 300nm | 38.0 | | | 14.9 | 14.7 | 10.7 | 10.4 | 8.5 |
| | | 350nm | 48.8 | | | 14.9 | 15.0 | 11.1 | 11.1 | 8.7 |
| | | 400nm | 57.8 | | | 15.8 | 15.6 | 12.1 | 11.9 | 9.5 |
| | | 450nm | 61.7 | | | 17.4 | 15.5 | 12.4 | 12.0 | 9.8 |
| | | 500nm | 67.2 | | | 20.2 | 15.9 | 13.1 | 12.4 | 10.6 |
| | | 550nm | 71.5 | | | 18.6 | 16.5 | 13.7 | 13.0 | 11.3 |
| | | 600nm | 72.3 | | | 19.7 | 17.1 | 14.1 | 13.8 | 11.8 |
| | | 700nm | 74.0 | | | 27.1 | 18.9 | 14.5 | 15.2 | 12.2 |
| | | 800nm | 72.2 | | | 29.8 | 21.7 | 14.9 | 17.0 | 12.8 |
| regular reflectance % | wave length of light | 220nm | 1.6 | | | 0.9 | 0.8 | 0.7 | 0.7 | 0.7 |
| | | 250nm | 1.2 | | | 0.8 | 0.7 | 0.7 | 0.6 | 0.6 |
| | | 300nm | 1.7 | | | 0.8 | 0.8 | 0.7 | 0.7 | 0.6 |
| | | 350nm | 2.2 | | | 0.9 | 0.9 | 0.8 | 0.8 | 0.7 |
| | | 400nm | 2.5 | | | 0.9 | 0.9 | 0.8 | 0.8 | 0.7 |
| | | 450nm | 2.6 | | | 1.0 | 0.9 | 0.8 | 0.8 | 0.7 |
| | | 500nm | 2.8 | | | 1.1 | 0.9 | 0.8 | 0.8 | 0.8 |
| | | 550nm | 3.1 | | | 1.1 | 1.0 | 0.9 | 0.9 | 0.8 |
| | | 600nm | 3.1 | | | 1.1 | 1.0 | 0.9 | 0.9 | 0.9 |
| | | 700nm | 3.3 | | | 1.4 | 1.1 | 1.0 | 1.0 | 0.9 |
| | | 800nm | 3.7 | | | 2.0 | 1.7 | 1.4 | 1.5 | 1.4 |

The weight ratio of each component is shown as the oxides in Table 1. The weight ratio of *Al, Ti, Fe* and *Mn* are respectively converted to $Al_2O_3$, $TiO_2$, $Fe_2O_3$ and *MnO. Si, Ca* and *Mg* are respectively converted to $SiO_2$, *CaO* and *MgO.* Sample No. 1 represents a ceramic containing an extremely high proportion of alumina as a main component. The ceramics of sample Nos. 1 - 3 do not contain *MnO.*

With respect to specific gravity in Table 1, about 30 mm square samples of thickness of 20 mm were prepared, and measurement was carried out using the Archimedes method. Samples of 100 mm x 20 mm x 2 mm were prepared, and Young's modulus was measured using a sonic test provided in JIS (Japan Industrial Standard) R1602. Specific rigidity was calculated by dividing the Young's modulus by the specific gravity. The ceramics preferably have a specific rigidity of 65 $GPa.cm^3/g$ or higher, so as to be usable with a large precision chuck or support platform. The high purity ceramic of sample No. 1 has a specific rigidity of 94.9 $GPa.cm^3/g$. On the other hand, the ceramic of sample No. 8 has a specific rigidity of 59.5 $GPa.cm^3/g$, which is less than 70% of the specific rigidity of sample No. 1. The ceramic of sample No. 8 is disadvantageous with respect to specific rigidity, and the ceramic is required to contain 80 wt% or more of alumina.

100 mm square samples with a thickness of 20 mm were ground using a grain 140 diamond grinding wheel at upper and lower surfaces until the thickness was 6 mm. Electrodes were coated on both ends of the samples, and resistance value r was measured using an insulation ohmmeter. Volume resistivity *R* was obtained using the following formula.

$$R = r \, x \, S \, / \, t$$

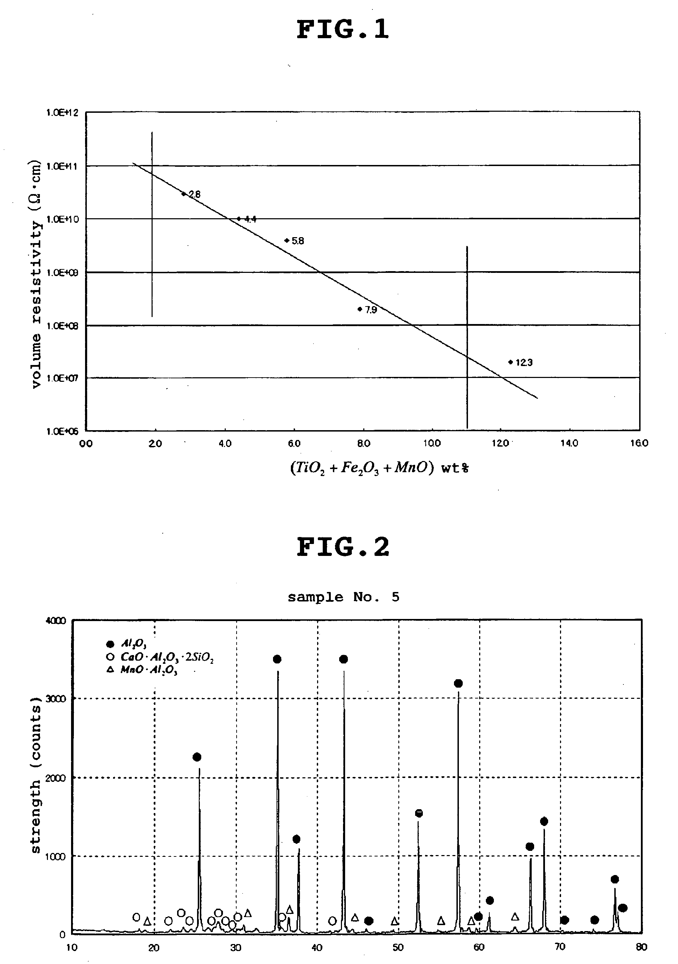

*S* is surface area of the ohmmeter electrodes, and *t* is sample thickness. If the ceramics for a precision chuck has a volume resistivity of $1 \times 10^{11}$ $\Omega \cdot cm$ or less, damage to the substrate for FPD caused by electrostatic polarization is reliably prevented. The ceramics of sample Nos. 4 - 8 satisfies this type of low volume resistivity. Referring to sample Nos. 1 - 3, conductivity does not occur in ceramics that do not contain *Mn.* The ceramic of sample No. 3 contains 1.1% wt of *Ti* and 0.1 % wt of *Fe,* but is not semiconductive. The ceramic sample No. 4 contains 0.7% wt of *Mn.* Therefore, the ceramic preferably contains 0.5% wt or more of Mn to appear semiconductive. The ceramic of sample Nos. 4-8 contain 0.5% wt of *Ti* and 0.5% of *Fe,* in addition to *Mn.* Also, the ceramic sample Nos. 4-8 contains $SiO_2$, *CaO* and *MgO* in a combined amount of 6-9% wt. Referring to the graph of Fig. 1, it will be understood that if the total weight ratio of $TiO_2$, $Fe_2O_3$ and *MnO* and becomes large, the volume resistivity becomes lower. Referring to samples 2 - 3, conductivity does not appear in ceramics that contain less than a total of 2% wt of $TiO_2$, $Fe_2O_3$ and *MnO.* Therefore, the alumina ceramics preferably contains a total of 2% wt or more of $TiO_2$, $Fe_2O_3$ and *MnO* to appear semiconductive.

A splinter of each sample was crushed using a mortar, and crystal analysis was carried out using an X-ray diffractometer. The crystal amounts shown in Table 1 were determined from X-ray diffraction strength.

Fig. 2, Fig. 3 and Fig. 4 show X-ray diffraction patterns for the ceramic sample Nos. 5, 6 and 7 respectively. The ceramic sample Nos. 4-8 were judged to be mainly composed of crystals of alumina ($Al_2O_3$), Mn-Al spinel ($MnO \cdot Al_2O_3$) and anorthite ($CaO \cdot Al_2O_3 \cdot 2SiO_2$). With the ceramic sample Nos. 4-6, there are microscopic amounts of crystals composed of *Ti* or *Fe*. Crystals formed from *Ti* or *Fe* are not contained in sample Nos. 7 - 8. It is therefore, judged that a lot of *Ti* and *Fe* is dissolved in the *Mn - Al* spinel crystals. As a result, conductivity is efficiently imparted via lattice imperfections inside non-stoichiometric generated compounds.

Oxygen-deficient lattice defects occur when oxygen is lacking at crystal interstices. In the case where there is too much oxygen at crystal interstices, this is called an excessive oxygen, or metal deficient, lattice defect. Both types of lattice defect arise in $TiO_2$, which is a 3d transition metal oxide; $TiO_2$ has a wide range of non-stoichimetry. A combination of oxygen-deficient lattice defects and excessive oxygen lattice defects arises in oxides of *Fe,* which is a 3d transition metal. *Ti* and *Fe,* whose oxides easily form non-stoichimetric compounds, can be made to exhibit many lattice defects without excessively lowering the proportion of alumina.

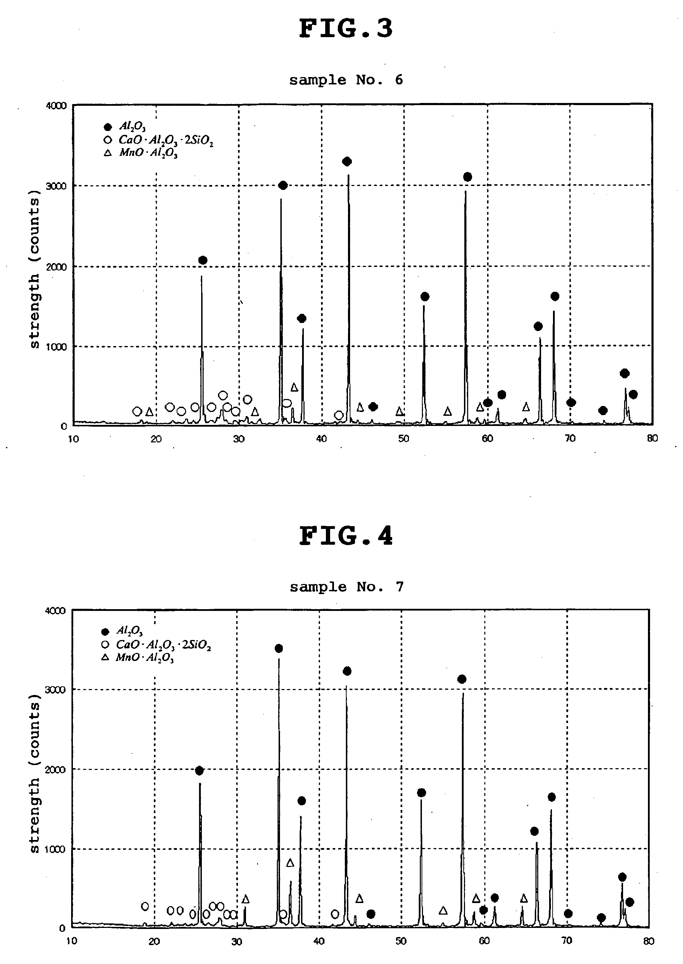

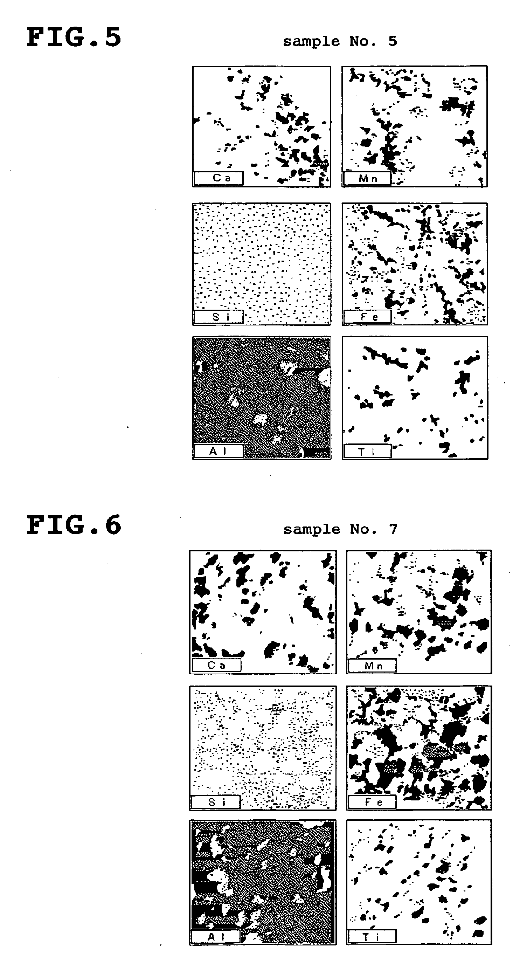

Splinters of sample Nos. 5 and 7 were subjected to buffing using a diamond abrasive. These splinters were analysed for each of the elements *Mg, Ca, Al, Fe, Si, Mn* and *Ti* using an EPMA (Electron Probe X-ray Analyzer). Fig. 4 and Fig. 5 show element maps for sample No. 5 and sample No. 7 respectively. Mn has a non-uniform distribution; the distribution range of *Mn* is at places where *Mn - Al* spinel crystals are generated, and overlaps with the distribution range of *Fe* or *Ti.* Ca also has a non-uniform distribution, and the distribution range here is at places where anorthite crystals are generated, and is extremely close to the distribution range of *Mn, Ti* and *Fe.*

It was estimated that each component was separated by a cooling process, to produce *Mn - Al* spinel crystals and anorthite crystals. Alternatively, it was estimated that under the high temperature of a calcinations process *Mn - Al* spinel crystals were produced at a molten glass interface. In either case, the production of anorthite crystals contributes to the overlapping distribution of *Mn, Ti* and *Fe.*

A 100 mm square sample (the same as that used for measurement of volume resistivity) was used to measure optical reflectance with light having a wavelength of 200 - 800 nm. The sample surface was irradiated. A cumulative reflectance was obtained by detecting the diffuse reflected light and regular refluctance was obtained by detecting light reflected at 0 degrees. The surface roughness of the sample was 0.6 $\mu Ra$.

If the cumulative reflectance of pressure-compacted barium carbonate powder is 100% then the regular reflectance of an aluminium material subjected to specular finishing is also 100%.

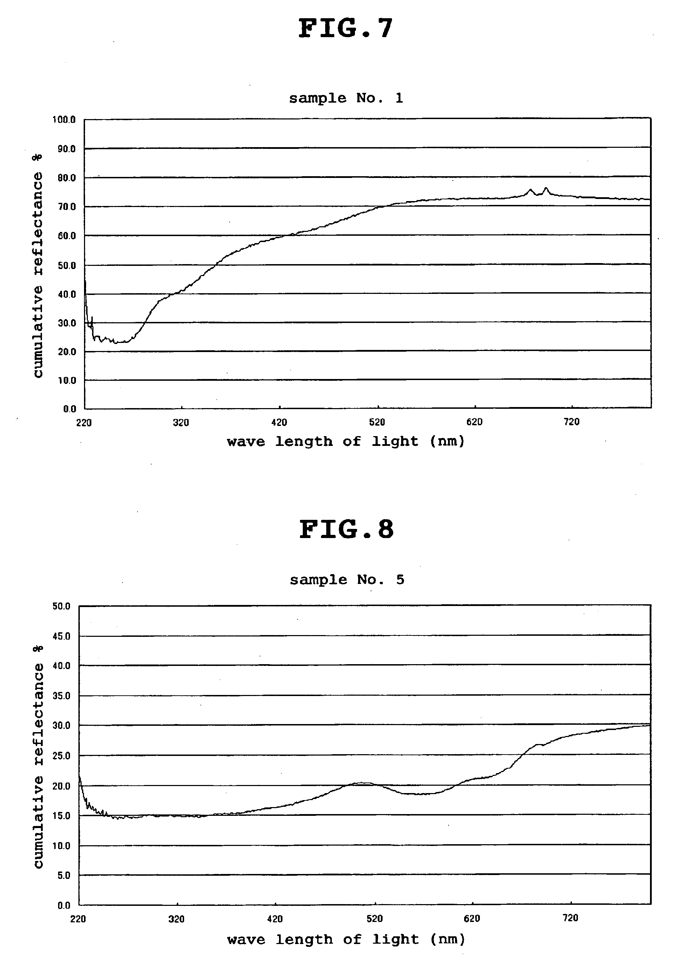

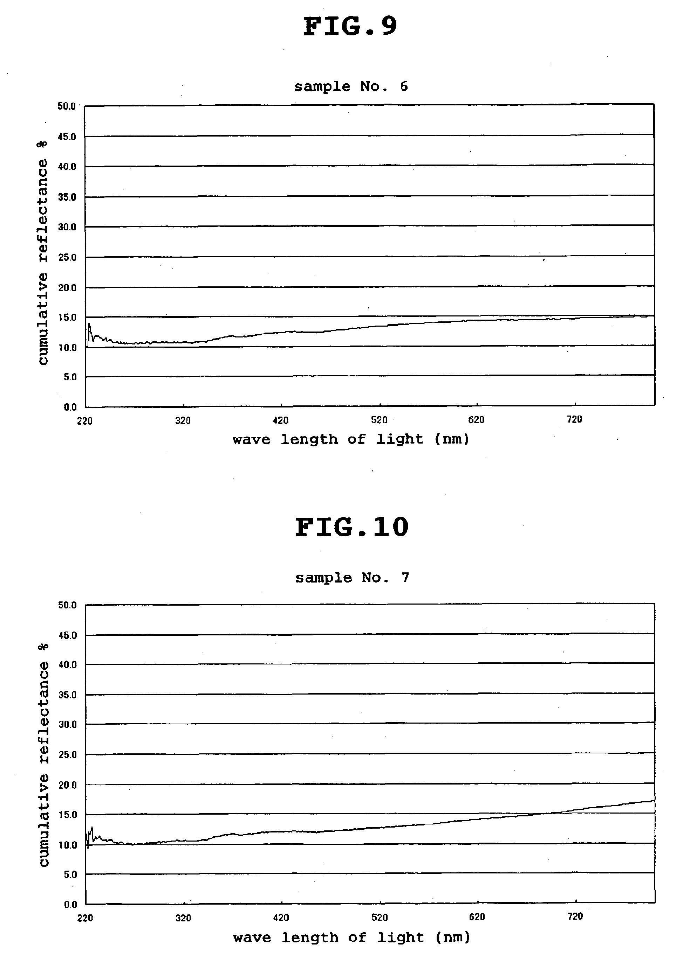

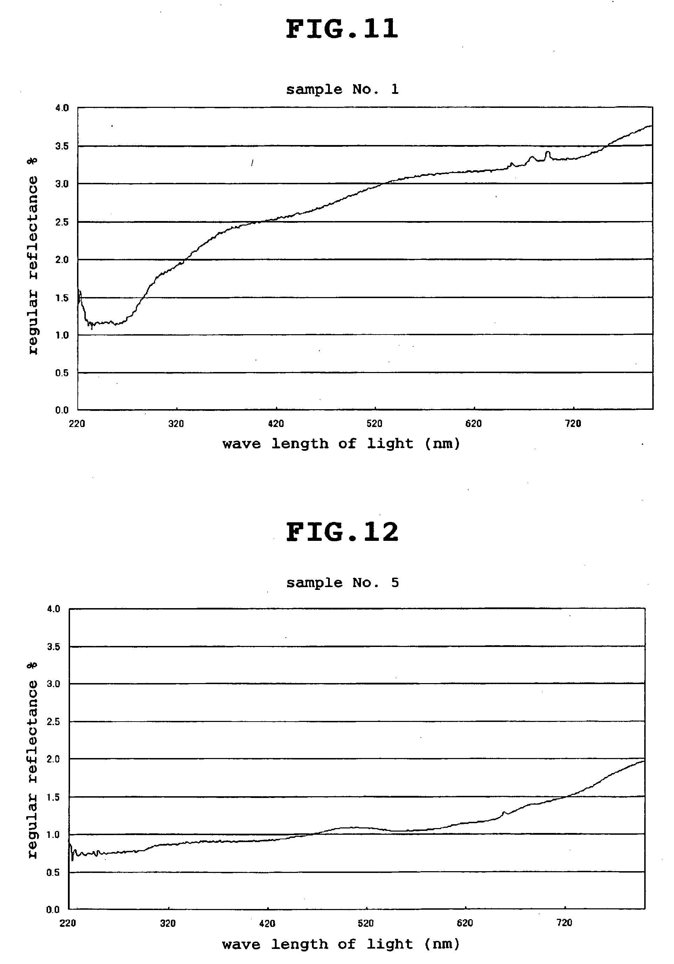

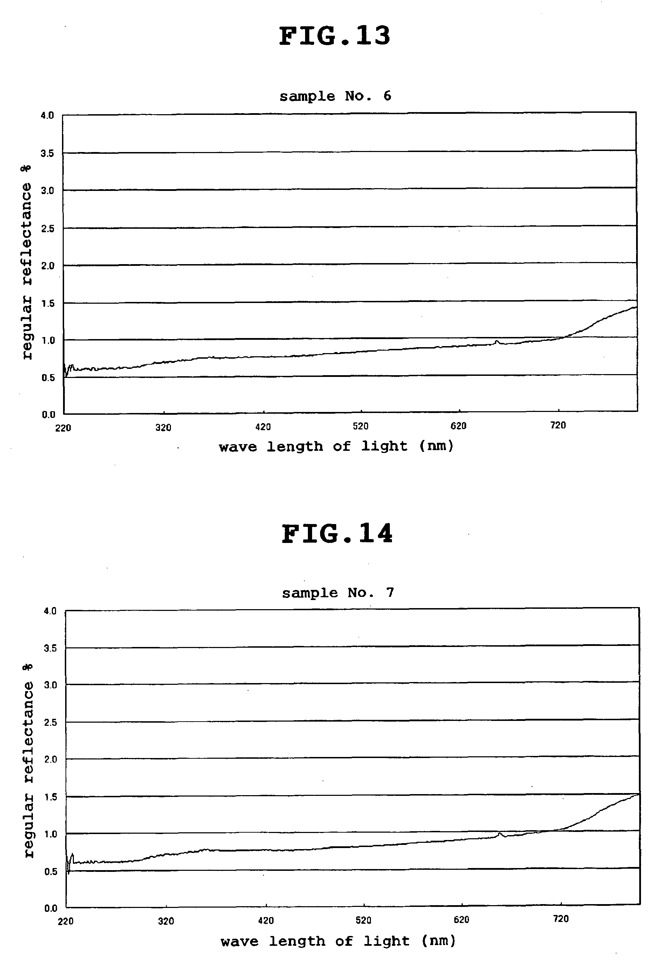

Fig. 7, Fig. 8, Fig. 9 and Fig. 10 show cumulative reflectance for sample Nos. 1, 5, 6 and 7 in a wavelength range of 220 - 800 nm. Fig. 11, Fig. 12, Fig. 13 and Fig. 14 show regular reflectance for the same samples. Cumulative reflectance was 10.3 - 15.0% for wavelength 220 - 350 nm, 11.9 - 16.5% for wavelength 400 - 550 nm, and 13.8 - 21.7% for wavelength 600 - 800 nm. Regular reflectance was 0.6 - 0.9% for wavelength 220 - 350 nm, 0.8 - 1.0% for wavelength 400 - 550 nm, and 0.9 - 1.7% for wavelength 600 - 800 nm.

Table 2 shows reflectance ratios for sample Nos. 5 - 8, for the case where reflectance of sample No. 1 is 100%. From Table 2, the cumulative reflectance of sample Nos. 5 - 8 is 18 - 62% of that of sample No. 1. Also, the regular reflectance of samples 5 - 8 is 28 - 67% of that of sample No. 1.

TABLE 2

| sample number | | | 5 | 6 | 7 | 8 |
|---|---|---|---|---|---|---|
| | | | comparison to sample No. 1 | | | |
| cumulative reflectance % | wave length of light | 220nm | 56.3% | 55.0% | 30.0% | 28.8% |
| | | 250nm | 61.6% | 60.2% | 44.2% | 42.2% |
| | | 300nm | 39.2% | 38.7% | 28.2% | 27.5% |
| | | 350nm | 30.5% | 30.7% | 22.8% | 22.7% |
| | | 400nm | 27.4% | 27.0% | 20.9% | 20.7% |
| | | 450nm | 28.2% | 25.2% | 20.1% | 19.4% |
| | | 500nm | 30.1% | 23.7% | 19.5% | 18.5% |
| | | 550nm | 26.0% | 23.0% | 19.2% | 18.2% |
| | | 600nm | 27.2% | 23.7% | 19.6% | 19.0% |
| | | 700nm | 36.6% | 25.5% | 19.5% | 20.5% |
| | | 800nm | 41.3% | 30.0% | 20.6% | 23.6% |
| regular reflectance % | wave length of light | 220nm | 56.3% | 50.0% | 43.8% | 43.8% |
| | | 250nm | 66.7% | 61.9% | 54.3% | 53.9% |
| | | 300nm | 46.8% | 46.1% | 40.3% | 39.7% |
| | | 350nm | 41.6% | 40.9% | 35.7% | 35.3% |
| | | 400nm | 36.5% | 36.2% | 32.2% | 31.5% |
| | | 450nm | 38.4% | 34.3% | 31.0% | 30.2% |
| | | 500nm | 38.7% | 32.4% | 29.8% | 28.7% |
| | | 550nm | 36.0% | 31.4% | 29.0% | 27.9% |
| | | 600nm | 35.1% | 32.0% | 29.1% | 28.5% |
| | | 700nm | 42.3% | 34.3% | 29.8% | 30.4% |
| | | 800nm | 53.4% | 45.2% | 38.5% | 40.4% |

A compacted powder body the same as that of sample Nos. 6 and 7 was calcinated into a ceramic using an LPG furnace instead of the electrical furnace. Table 3 shows the characteristics of these ceramics, and they all have sufficiently high rigidity, low volume resistivity and low reflectance.

TABLE 3

| sample number | | 6 | 7 |
|---|---|---|---|
| calcination | temperature °C | 1400°C | 1350°C |
| specific gravity | | 3.4 | 3.4 |
| young's modulus | GPa | 232 | 225 |
| specific rigidity | young's modulus/specific gravity | 68.2 | 67.2 |
| volume resistivity | $\Omega \cdot cm$ | 3.0E+09 | 1.0E+08 |

(continued)

| sample number | | | 6 | 7 |
|---|---|---|---|---|
| crystal phase (quantity) | alumina ($Al_2O_3$)<br>anorthite ($CaO \cdot Al_2O_3 \cdot 2SiO_2$)<br>Mn-Al spinel ($MnO - Al_2O_3$)<br>ilmenite ($FeO \cdot TiO_2$)<br>rutile ($TiO_2$) | | large<br>small<br>smaller med.<br>very small<br>- | large<br>small<br>medium<br>-<br>- |
| cumulative reflectance % | wave length of light | 220nm | 12.0 | 12.0 |
| | | 250nm | 10.7 | 10.3 |
| | | 300nm | 10.7 | 10.4 |
| | | 350nm | 11.1 | 11.1 |
| | | 400nm | 12.1 | 11.9 |
| | | 450nm | 12.4 | 12.0 |
| | | 500nm | 13.1 | 12.4 |
| | | 550nm | 13.7 | 13.0 |
| | | 600nm | 14.1 | 13.8 |
| | | 700nm | 14.5 | 15.2 |
| | | 800nm | 14.9 | 17.0 |
| regular reflectance % | wave length of light | 220nm | 0.7 | 0.6 |
| | | 250nm | 0.7 | 0.6 |
| | | 300nm | 0.7 | 0.7 |
| | | 350nm | 0.8 | 0.8 |
| | | 400nm | 0.8 | 0.8 |
| | | 450nm | 0.8 | 0.8 |
| | | 500nm | 0.8 | 0.8 |
| | | 550nm | 0.9 | 0.9 |
| | | 600nm | 0.9 | 0.9 |
| | | 700nm | 1.0 | 1.0 |
| | | 800nm | 1.4 | 1.5 |

Recently there has been an increase in the demand for large-scale precision chucks or support platforms that has accompanied the demand for an increase in size of FPD substrates. Precision chucks provided with large-scale bases that are of the order of meters in size are known. The ceramics of the present invention can also be applied to large-scale precision chucks or support platforms in FPD manufacturing devices and semi/conductor manufacturing devices. Also, the ceramic manufacturing method of the present invention does not require a special atmosphere.

**Claims**

1. A ceramic containing 80% wt or greater of alumina, **$SiO_2$** in an amount of 4% wt or greater, **$CaO$** in an amount of 0.4% wt or greater, **$MgO$** in an amount of 0.4% wt or greater, the elements **$Mn, Ti$** and **$Fe, Mn - Al$** spinel **($MnO \cdot Al_2O_3$)** crystals, and anorthite crystals **($CaO \cdot Al_2O_3 - 2SiO_2$)** generated by calcination, and having a volume resistivity of 1 x $10^{11}$ **$\Omega \cdot cm$** or less.

2. The ceramic of claim 1, containing a total amount of oxides of **$Mn, Ti$** and **$Fe$** in the range 2-11 % wt.

3. The ceramic of claim 1, containing **$MnO$** in an amount of 0.5% wt or greater.

4. The ceramic of claim 1, containing **$TiO_2$ in** an amount of 0.5% wt or greater and **$Fe_2O_3$ in** an amount of 0.5% wt or greater.

5. The ceramic of claim 1, having a specific rigidity of 65 **$GPa \cdot cm^3/g$** or greater.

**6.** The ceramic of claim 1, wherein when the surface of the ground ceramic is irradiated with light the cumulative reflectance is 10.3 - 15.0% for wavelengths in the range 220 - 350 nm, 11.9 - 16.5% for wavelengths in the range 400 - 550 nm, and 13.8 - 21.7% for wavelengths in the range 600 - 800 nm.

**7.** The ceramic of claim 1, wherein when the surface of the ceramic, with a surface roughness of 0.6 $\mu Ra$, is irradiated with light, the regular reflectance at 0 degrees is 0.6 - 0.9% for wavelengths in the range 220 - 350 nm, 0.8 - 1.0% for wavelengths in the range 400 - 550 nm, and 0.9 - 1.7% for wavelengths in the range 600 - 800 nm.

**8.** The ceramic of claim 1, containing a total amount of oxides of *Si, Ca* and *Mg* in the range 6 - 9% wt or greater.

**9.** A method of manufacturing a ceramic according to any preceding claim, wherein a compacted body is formed using a powder containing aluminia *($Al_2O_3$)*, as a main component, with manganese dioxide *($MnO_2$)*, titanium oxide *($TiO_2$)*, iron oxide *($Fe_2O_3$)*, silica stone or clay, dolomite, calcite and magnesite, to include 80% wt or greater of alumina, 4% wt or greater of *$SiO_2$*, and 0.4% wt or greater of *CaO*, and 0.4% wt or greater of *MgO*, and *Mn - Al* spinel crystals and anorthite crystals *($CaO·Al_2O_3·2SiO_2$)*, and the compacted body is calcinated in an LPG furnace or an electrical furnace at temperatures in the range 1,300 - 1,450 °C.

**Patentansprüche**

**1.** Eine Keramik, die 80 Gew% oder mehr an Tonerde, *$SiO_2$* in einem Anteil von 4 Gew% oder größer, *CaO* in einem Anteil von 0,4 Gew% oder größer, *MgO* in einem Anteil von 0,4% Gew% oder größer, die Elemente *Mn, Ti* und *Fe, Mn-Al*-Spinell-*($MnO·Al_2O_3$)*-Kristalle und Anorthitkristalle *($CaO· Al_2O_3·2SiO_2$)*, die durch Kalzinieren erzeugt wurden, enthält und einen Durchgangswiderstand von 1 x $10^{11}$ $\Omega·cm$ oder weniger aufweist.

**2.** Die Keramik entsprechend Anspruch 1, die eine Gesamtmenge der Oxide von *Mn, Ti* und *Fe* im Bereich von 2-11% Gew% enthält.

**3.** Die Keramik entsprechend Anspruch 1, die *MnO* in einem Anteil von 0,5 Gew% oder größer enthält.

**4.** Die Keramik entsprechend Anspruch 1, die *$TiO_2$* in einem Anteil von 0,5 Gew% oder größer und *$Fe_2O_3$* in einem Anteil von 0,5 Gew% oder größer enthält.

**5.** Die Keramik entsprechend Anspruch 1, die ein spezifische Steifigkeit von 65 *$GPa·cm^3$*/g oder höher aufweist.

**6.** Die Keramik entsprechend Anspruch 1, wobei, wenn die Oberfläche der geschliffenen Keramik mit Licht bestrahlt wird, für Wellenlängen im Bereich von 220 - 350 nm der Gesamtreflexionsgrad bei 10,3 - 15,0 %, für Wellenlängen im Bereich von 400 - 550 nm bei 11,9 - 16,5% und für Wellenlängen im Bereich von 600 - 800 nm 13,8 - 21,7% liegt.

**7.** Die Keramik entsprechend Anspruch 1, wobei, wenn die Oberfläche der Keramik mit einer Oberflächenrauhigkeit von 0,6 $\mu Ra$ mit Licht bestrahlt wird, der normale Reflexionsgrad bei 0 Grad für Wellenlängen im Bereich von 220 - 350 nm im Bereich von 0,6 - 0,9 %, für Wellenlängen im Bereich von 400 - 550 nm bei 0,8 - 1,0% und für Wellenlängen im Bereich von 600 - 800 nm bei 0,9 - 1,7 % liegt.

**8.** Die Keramik entsprechend Anspruch 1, die einen Gesamtanteil der Oxide von *Si, Ca* und *Mg* im Bereich von 6 - 9 Gew% enthält.

**9.** Ein Verfahren zur Herstellung einer Keramik entsprechend einem der vorhergehenden Ansprüche, wobei eine kompakte Masse unter Verwendung eines Pulvers geformt wird, das Tonerde *($Al_2O_3$)* als Hauptbestandteil und Mangandioxid *($MnO_2$)*, Titanoxid *($TiO_2$)*, Eisenoxid *($Fe_2O_3$)*, Kieselstein oder Ton, Dolomit, Calcit und Magnesit enthält, wobei 80 Gew% oder mehr Tonerde, 4 Gew% oder mehr *$SiO_2$* und 0,4 Gew% *CaO* und 0,4 Gew% oder mehr *MgO* sowie *Mn - Al*-Spinellkristalle und Anorthitkristalle *($CaO·Al_2O_3·2SiO_2$)* dazu gehören und die kompakte Masse in einem LPG-Ofen oder einem elektrischen Ofen bei einer Temperatur im Bereich von 1300 - 1450 °C kalziniert wird.

**Revendications**

1. Céramique contenant 80% en poids ou plus d'alumine, de $SiO_2$ en une quantité de 4% en poids ou supérieure, de **CaO** en une quantité de 0,4% en poids ou supérieure, de **MgO** en une quantité de 0,4% en poids ou supérieure, d'éléments **Mn, Ti** et **Fe,** de cristaux **Mn-Al** du groupe des spinelles **($MnO \cdot Al_2O_3$)** et de cristaux d'anorthite **($CaO \cdot Al_2O_3 \cdot 2SiO_2$)** générés par calcination et présentant une résistivité volumique de 1 x $10^{11}$ $\Omega \cdot cm$ ou inférieure.

2. Céramique selon la revendication 1, contenant une quantité totale d'oxydes de **Mn, Ti** et **Fe** se situant dans la plage de 2 à 11 % en poids.

3. Céramique selon la revendication 1, contenant du **MnO** en une quantité de 0,5% en poids ou supérieure.

4. Céramique selon la revendication 1, contenant du **$TiO_2$** en une quantité de 0,5% en poids ou supérieure et du **$Fe_2O_3$** en une quantité de 0,5% en poids ou supérieure.

5. Céramique selon la revendication 1, présentant une rigidité spécifique de 65 **$GPa \cdot cm^3$**/g ou supérieure.

6. Céramique selon la revendication 1, dans laquelle la surface de la céramique rectifiée est irradiée de lumière dont la réflectance cumulée est de 10,3 à 15,0% pour les longueurs d'ondes se situant dans la plage de 220 à 350 nm, de 11,9 à 16,5% pour les longueurs d'onde se situant dans la plage de 400 à 550 nm et de 13,8 à 21,7% pour les longueurs d'onde se situant dans la plage de 600 à 800 nm.

7. Céramique selon la revendication 1, dans laquelle lorsque la surface de la céramique, ayant une rugosité de surface de 0,6 $\mu Ra,$ est irradiée de lumière, la réflectance spéculaire à 0 degrés étant de 0,6 à 0,9% pour les longueurs d'ondes se situant dans la plage de 220 à 350 nm, de 0,8 à 1,0% pour les longueurs d'ondes se situant dans la plage de 400 à 550 nm et de 0,9 à 1,7% pour les longueurs d'ondes se situant dans la plage de 600 à 800 nm.

8. Céramique selon la revendication 1, contenant une quantité totale d'oxydes de **Si, Ca** et **Mg** se situant dans la plage de 6 à 9 % en poids ou supérieure.

9. Procédé de production d'une céramique selon l'une quelconque des revendications précédentes, dans laquelle un corps compacté est formé par l'utilisation d'une poudre contenant de l'alumine (**$Al_2O_3$**), à titre de composant principal, avec du dioxyde de manganèse **($MnO_2$),** de l'oxyde titane **($TiO_2$),** de l'oxyde de fer **($Fe_2O_3$),** de la silice ou de l'argile, de la dolomite, du calcite et de la magnésite, de manière à inclure 80% en poids ou plus d'alumine, 4% en poids ou plus de **$SiO_2$** et 0,4% en poids ou plus de **CaO** et 0,4% en poids ou plus de **MgO** et de cristaux **Mn - Al** du groupe des spinelles et de cristaux d'anorthite **($CaO \cdot Al_2O_3 \cdot 2SiO_2$),** et le corps compacté est calciné dans un four à gaz de pétrole liquéfié (LPG) ou un four électrique à des températures se situant dans la plage de 1300 à 1450 °C.

# FIG.1

$(TiO_2 + Fe_2O_3 + MnO)$ wt%

# FIG.2

sample No. 5

# FIG.3

sample No. 6

# FIG.4

sample No. 7

**FIG.5**

sample No. 5

**FIG.6**

sample No. 7

# FIG.7

sample No. 1

# FIG.8

sample No. 5

# FIG.9

sample No. 6

# FIG.10

sample No. 7

# FIG.11

sample No. 1

# FIG.12

sample No. 5

# FIG.13

sample No. 6

# FIG.14

sample No. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8262090 A
- JP 8139168 A
- JP 2001019540 A
- JP 10095673 A

- JP 11245133 A
- JP 62094953 A
- JP 11189458 A
- GB 2288597 A